(19) **Europäisches Patentamt**
**European Patent Office**
**Office européen des brevets**

(11) **EP 3 745 352 B1**

(12) **EUROPEAN PATENT SPECIFICATION**

(45) Date of publication and mention
of the grant of the patent:
**18.01.2023 Bulletin 2023/03**

(21) Application number: **19177584.0**

(22) Date of filing: **31.05.2019**

(51) International Patent Classification (IPC):
**G06T 7/62** *(2017.01)*      **G06Q 30/06** *(2012.01)*

(52) Cooperative Patent Classification (CPC):
**G06Q 30/0631; G06T 7/62;** G06T 2207/10016;
G06T 2207/20081; G06T 2207/20084;
G06T 2207/30196

(54) **METHODS AND SYSTEMS FOR DETERMINING BODY MEASUREMENTS AND PROVIDING CLOTHING SIZE RECOMMENDATIONS**

VERFAHREN UND SYSTEME ZUR BESTIMMUNG VON KÖRPERABMESSUNGEN UND ZUR BEREITSTELLUNG VON KLEIDERGRÖSSENEMPFEHLUNGEN

PROCÉDÉS ET SYSTÈMES POUR DÉTERMINER DES MESURES CORPORELLES ET FOURNIR DES RECOMMANDATIONS DE TAILLES DE VÊTEMENTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.12.2020 Bulletin 2020/49**

(73) Proprietor: **presize GmbH**
**80807 München (DE)**

(72) Inventors:
  • **SZELI, Leon**
    **80807 München (DE)**
  • **SHAFIQUE, Awais**
    **80805 München (DE)**
  • **TOMOV, Tomislav**
    **80803 München (DE)**

(74) Representative: **Murgitroyd & Company**
**Murgitroyd House**
**165-169 Scotland Street**
**Glasgow G5 8PL (GB)**

(56) References cited:
**WO-A1-2015/155550**      **CN-A- 108 986 159**
**US-A- 5 515 168**      **US-A1- 2010 111 370**
**US-A1- 2015 154 453**      **US-A1- 2017 091 844**

• **ISINKAYE F O ET AL: "Recommendation systems: Principles, methods and evaluation", EGYPTIAN INFORMATICS JOURNAL, ELSEVIER, AMSTERDAM, NL, vol. 16, no. 3, 20 August 2015 (2015-08-20), pages 261-273, XP029356689, ISSN: 1110-8665, DOI: 10.1016/J.EIJ.2015.06.005**
• **Dietmar Jannach ET AL: "Hybrid recommendation approaches" In: "Recommender Systems: An Introduction", 1 January 2011 (2011-01-01), Cambridge University Press, XP055658949, pages 124-142, * section 5.3.2 * * figure 5.1 ***

**Description**

Field of the Invention

The present invention refers to methods and systems for determining body measurements of a person, as well as to methods and systems for providing clothing size recommendations.

Prior Art

Shopping online for clothing enjoys ever increasing popularity. One downside of the online shopping experience is that, although the design of items of clothing can be evaluated to some degree, the item cannot be tried on as it would be possible in an offline store. This leads to several undesired effects; for example it is not uncommon for shoppers that are interested in an item of a certain design to order one and the same item in several different sizings. The intention is to find the one sizing that optimally fits and/or suits the shopper, and to send back the other sizings.

Herein, a sizing should be understood to mean one particular version of the same item of clothing that is different from other versions, i.e. other sizings, only in at least some of its measurements. For example, one and the same sweater may be available in sizings XS (extra small), S (small), M (medium), L (large), XL (extra large) and so on.

An even more common occurrence is that a shopper orders only one sizing of an item but finds out that the ordered sizing does not fit after all, either because the shopper misjudged which sizing would be appropriate, or because for said specific item of clothing a particular sizing is smaller than other items of clothing of the same size. For example, an item of clothing that is considered to be "M" in Japan may be considered to be "S" in Germany or the like.

As a result, there is a lot of mail traffic because of items of clothing being sent back to the vendor by shoppers, often encouraged by national laws that force vendors to pay the transport fees. This mail traffic taxes not only environmental and public resources, but is also a substantial cost factor for vendors. Moreover, also the shoppers' patience is tried and shoppers may refrain from ordering clothing online at all because of the hassle with trying different sizings and having to send many or even all of them back to the vendor.

One way to meliorate these problems would be to compare detailed body measurements of a particular shopper - at least one measurement but the more measurements, the better - to properties of each sizing of each item of clothing, for example as a professional tailor would. However, very few people have their body measurements taken by professional tailors, mostly due to the inconvenience and cost of it. Many people also take their own measurements wrongly or simply attempt to guess the right sizing because it is too much effort to measure oneself, ending up with inaccurate guesses.

Accordingly, a method is desired for conveniently yet accurately determining at least one body measurement of a person.

However, even when body measurements are known, it is still not straightforward to determine the correct sizing of a particular item of clothing for a particular person since it will be a rare occurrence that the measurements of the person fit exactly the measurements of a particular sizing.

In addition, for the shoppers comparing their measurements with numerous sizing charts is too time-consuming when shopping. Moreover, different brands often have different sizing standards and sometimes even clothing items of nominally the same sizings and the same brand but for different items (designs) may differ from each other. Due to the negligibly rare usage of sizing charts web shops often publish a single averaged (across products) sizing chart to avoid the hassle of uploading (let alone generating) one sizing chart for every product in stock. The more averaged the sizing chart is, however, the less useful it will be when used to look up the right size of a product.

Accordingly, a method is desired for conveniently yet accurately providing a clothing size recommendation for a person based on at least one body measurement of the person. The clothing sizing recommendation may be a general size recommendation such as "Sizing M fits this person", a sizing recommendation for a specific type of clothing such as "For trousers, sizing M fits this person", an item-based sizing recommendation such as "For this particular item of clothing, sizing M fits this person", an overview recommendation such as "For this person, the following sizings of the following items of clothing fit: ..." and/or the like.

Prior art document US 2010/111370 A1 describes a system and a method of estimating the body shape of an individual from input data such as images or range maps.

US 2015/154453 A1 describes a method for deriving body size measures of a user from a sequence of 2D images.

US 5 515 168 A describes a device for the identification and classification of subjects having variable non-standardized shapes, comprising a device for taking views, a module for the acquisition and processing of the views and for the extraction of at least one given characteristic dimensional parameter, and a module for identification and classification of the studied subjects from the extracted characteristic parameters.

CN 108 986 159 A describes a method and a device for reconstruction and measurement of a three-dimensional human body model.

However, there is still a need for providing a more efficient and more accurate method for determining at least one body measurement of a person.

Summary of the Invention

The above objects, as well as further objects that may become explicitly or implicitly apparent in the following, are solved by the independent claims of the present invention.

Thus, according to a first aspect of the present invention, a computer-implemented method for determining at least one body measurement of a person, comprising at least the steps of:

- obtaining a plurality of images of the person, wherein the images in the plurality of images show the person from at least two different angles;

- selecting at least a sub-set of the received plurality of images to provide first input images;

- generating segmentation maps for the first input images, wherein the segmentation maps at least distinguish the person from a background;

- determining at least one body measurement of the person based at least on the generated segmentation maps.

Nowadays, with the widespread availability of cameras of high quality, for example in webcams, laptops, computer monitors, mobile phone, tablet computers and the like, it is very easy and convenient to obtain images of people, and indeed comes natural to many people that are fond of appreciating, buying and experimenting with fashion.

In some variants or embodiments, simply all of the obtained images may be selected as the first input images. In other variants, at least one criterion may be applied on the obtained images to select therefrom the first input images. One criterion may be that only such of the obtained images may be selected as the first input images that fulfill a pre-defined image quality criterion, for example that have a minimum image resolution, a minimum size, a minimum contrast (due to lighting etc.) and/or the like. Additionally, or alternatively, the method may be configured such that every x-th image of the obtained images is selected, preferably every x-th image out of a pre-selection of the obtained images based on the at least one criterion, wherein x is suitably chosen integer number.

The segmentation maps comprise at least one segmentation masks, wherein each segmentation mask contains, or indicates, pixels that are associated with a specific object category. In simple cases, a segmentation map comprises a single segmentation mask which differentiates the person in the image from the background. In other variants, the segmentation maps may comprise several segmentation masks, wherein different segmentation masks identify different body parts. For example, a segmentation map may comprise six segmentation masks: one for each of head, torso, and each extremity.

In the present context, "at least one body measurement" shall be understood to include a particular measurement type of a body of a person in a defined way in a defined location. Typical body measurement types include, in particular for women, shoulder, arm hole, upper arm, bust, upper belly, belly, waist, hips, thighs, inseam, bottom length, and/or knees, and may also include, in particular for men, collar, top of shoulder, chest, rise, inside leg and/or outside leg. Thus, determining more than one body measurement may include determining values for more than one type of body measurement. However, determining more than one body measurement may also include determining more than one measurement for the same body measurement type but using different methods.

In some advantageous embodiments, variants, or refinements of embodiments, the plurality of images of the person is a video of the person or is extracted from a video of the person. For example, the method may be configured such that a certain percentage of frames of the video and/or a certain minimum number of frame or the like is selected as the first input images.

In order to more accurately determine a plurality of body measurements, it is preferred that the video shows the person from at least two, more preferably from at least four, different viewing angles with respect to the longitudinal axis (from feet to crown) of the person, wherein the viewing different angles are most preferably separated from one another by a pre-defined minimum angle difference. For example, when the video shows a person turning around their longitudinal axis by 90 degrees, and the pre-defined minimum angle is 30 degrees, then said video shows the person from four different viewing angles.

It is most preferred if the video shows the person turning at least once completely around the longitudinal axis (i.e. at least 360 degrees), wherein additional complete turns (i.e. 720 degrees, 1080 degrees and so on) may further improve the accuracy using averaging techniques and the like.

In other words, in some advantageous embodiments, variants, or refinements of embodiments, obtaining the plurality of images of the person comprises acquiring the video of the person by filming the person while the person is at least partially turning around their longitudinal axis, and is preferably turning at least once completely around their longitudinal axis. Advantageously, the

The filming may be performed by one or more fixed cameras (for example a camera mounted in a computer screen or a laptop screen) or by a camera handheld by another person which may, for example, use their mobile phone to film the person for which the at least one body measurement is to be determined.

It is preferred that the filming is performed using a dedicated application ("the app") which may be installed on and run by a mobile device which, apart from acquiring the video, may advantageously acquire additional data that may be saved and, partially or completely, transmitted together with the video data. The app may also be a web application which is accessed by a web browser of the mobile device and which is displayed by a display of the mobile device.

For example, during the video acquisition process (i.e. the filming), the orientation of the mobile device as well as its linear accelerations in 3-dimensional space may be recorded. These may be helpful to determine, and possibly compensate, changes in the viewing angle that are not due to the filmed person moving but instead due to the filming mobile device moving. For example, when a person holding the mobile device running the app suddenly moves a step back, the person in the images appears to become smaller. However, using the orientation and acceleration of the mobile device it may be easily determined that the person has actually stayed the same size.

The above is a rather trivial example; however, it will be understood that involuntary or other movements of the filming mobile device could in principle result in other distortions of the size of the person in the video which are however compensable due to the measurements of orientation and/or acceleration of the filming mobile device. Preferably, the filming (i.e. the acquiring or recording of the video) is performed at frequencies in the range of 1 Hz to 100 Hz. It has been found that such frequencies provide a good balance between the constraints of taking enough image frames in the video so as to show the person from enough different viewing angles on the one hand, and the constraints of the capabilities of the camera as well as the desire to reduce data storage space needs.

In some advantageous embodiments, variants, or refinements of embodiments, the method further comprises selecting at least a sub-set of the first input images to provide second input images. Preferably, all of the first input images are selected as the second input images to be provided. However, in some variants additional filters and/or criteria which have to be fulfilled by the second input images may be applied to the first input images. It is further preferred that the number of second input images is in the range of 3 to 60.

The method may further comprise determining, in order to estimate a shape and/or pose of the person in each of the second input images, a corresponding parameter value $\theta^k_i$ for each image k of the second input images and for each parameter of a set of pre-defined parameters $\theta_i$. In particular, this may be performed by fitting a parametric human body model to the person in each of the second input images based on the generated segmentation maps.

The parametric human body model used may e.g. be the SMPL body model (see Loper et al.,"SMPL: A Skinned Multi-Person Linear Model", ACM Trans. Graphics (Proc. SIGGRAPH Asia), Oct. 2015, No. 6, pages 248:1-248:16, volume 34 of 2015), BlendSCAPE (see D.A. Hirshberg et al., "Coregistration: simultaneous alignment and modeling of articulated 3d shape", Proceedings of the twelfth European conference on computer vision (2012), pp. 242-255) or any other suitable known parametric human body model. It is preferred that a parametric body is used that comprises any set of parameters ($\theta = (\theta_1, \theta_2, ..., \theta_n)$) of $R^n$ , 10 < n < 1000 (preferably 20 < n < 300), that describe the geometrical shape, pose and other features of the human body.

The method further comprises generating an input tensor based on the determined parameter values $\theta^k_i$. The input tensor may be generated such as to comprise all individual values for $\theta^k_i$ for each parameter $\theta_i$ for each image k of the second input images. Alternatively, a pre-processing may be performed; for example, an averaging metric $\theta^{avg}_i$ for the values for each parameters $\theta_i$ may be determined, and the input tensor may comprise the n averaging metrics $\theta^{avg}_i$. The averaging metric may be a mean such as a geometric mean or an algebraic mean, a median and/or the like.

The method may then comprise inputting the input tensor into an artificial neural network configured and trained to infer at least one body measurement based on the input tensor, and generating, by the artificial neural network, at least one body measurement based on the input tensor.

The method comprises selecting at least a subset of the first input images to provide third input images. All of the first input images may be selected as the third input images, and/or the third input images may overlap, or be identical with, the second input images.

The method further comprises determining locations for a number of pre-defined key points on the human body by inputting the third input images into an artificial neural network configured and trained to infer the location for the key points based on the input third input images.

The method further comprises determining, based on the determined locations for the key points, a subset of the first input images so as to provide fourth input images such that each of the fourth input images corresponds to one view of a set of pre-defined views of the person from different angles, preferably at least four different pre-defined views, each corresponding to a different viewing angle of the person. It is preferred that the at least four pre-defined view comprise a (full) front view, a (full) back view, a left (side) view and a right (side) view. More preferably, more than four pre-defined views are determined to increase accuracy.

The number of pre-defined key points may comprise a number of pairs of symmetric key points (in particular symmetric respective to the sagittal-longitudinal plane of the human body).

Advantageously, in images (or: frames) distances between the two key points of each pair of symmetric key points can be determined, and a pose/orientation of the person can be determined on at least one of these determined lengths. In particular, the full front or full back viewing angle can be determined by the images in which at least one (or a majority, or all) of the determined distances are maximal. Correspondingly, a left or right side view of the person can be determined by the images in which in which at least one (or a majority, or all) of the determined distances are minimal.

The method further comprises generating, for each of the fourth input images, a silhouette of the person therein, and determining at least one body measurement for the person by inputting an input based on the determined locations for the key points and the generated silhouettes, into a body measurement determining model. Said input may comprise, or consist of, the key points and the generated silhouettes themselves and/or data calculated based thereon.

According to a second aspect of the present invention, a computer-implemented method for providing a clothing size recommendation for a person is provided comprising generating at least one body measurement according to the method according to any embodiment of the first aspect of the present invention. The method may further comprise inputting the at least one body measurement into a clothing size recommendation model configured to generate a clothing size recommendation based on the at least one body measurement, and generating, by the size recommendation model, the clothing size recommendation based on the at least one body measurement.

As has been described in the foregoing, the clothing sizing recommendation may be a general size recommendation such as "Sizing M fits this person", a sizing recommendation for a specific type of clothing such as "For trousers, sizing M fits this person" or "For jeans, 34W32L fits this person" or "For shirts, size 38 fits this person", an item-based sizing recommendation such as "For this particular item of clothing, sizing M fits this person", an overview recommendation such as "For this person, the following sizings of the following items of clothing fit: ..." and/or the like.

In some advantageous embodiments, variants, or refinements of embodiments, the method according to the second aspect comprises receiving or retrieving clothing item information indicating at least one property of an item of clothing, and the clothing size recommendation is generated also based on the clothing item information.

For example, the clothing item information may comprise, or consist of, information about at least one measurement of at least one item of clothing (e.g. one that a customer has selected) such as a recommended, or a maximum body measurement of specific type for the item of clothing (e.g. recommended waist size X cm). the clothing item information may also comprise, or consist of, information about a relationship between the person and at least one sizing of the item of clothing.

For example, a user may have order sizing L of one particular item of clothing, may have found out that sizing L is too large and has sent the item back, giving the feedback that sizing L is too large for the person. When generating a clothing size recommendation for that user regarding the same item of clothing, this information may be used (for example to recommend a sizing smaller than L for the person). The clothing item information may comprise, or consist of, many other items or types of information such as an elasticity of the item of clothing at a position corresponding to one of the body measurements (such as the waist) and/or the like.

In some advantageous embodiments, variants, or refinements of embodiments, the clothing item information indicates properties of at least two different sizings of an item of clothing, and wherein the clothing size recommendation includes, for at least one of the at least two different sizings, a recommendation information of fitting or non-fitting of said at least one sizing for the person. Preferably, the clothing item information indicates properties of all available or existing sizings of the item of clothing and the clothing size recommendation includes a recommendation information of fitting or non-fitting of each of the sizings for the person. Optionally, the user may input additional parameters, for example indicating that the user prefers a "loose fit" or a "tight fit" in general or in a particular body measurement region, which can be used in the method for the clothing size recommendation.

In some advantageous embodiments, variants, or refinements of embodiments, the method according to the second aspect further comprises the step of receiving or retrieving return information indicating at least one item of clothing which has been labelled as being of a wrong size or poor fit (i.e. has been given a low fit rating) for a user. This user may be the same as the user that is currently desiring a clothing size recommendation but may also be another user, preferably a plurality of other users.

The reason is that, for example, users with the same body type, or even very similar body measurements, as the current user may have consistently given low fit ratings to a particular sizing so it stands to reason that the same will be true also for the current user. Vice versa, when no such information is available, but for example a lot of users with very different body measurements from the current user's have given high fit ratings to a particular sizing then it stands to reason that the same sizing will very likely not be a good fit for the current user.

"Wrong size" may indicate that the person cannot fit (optionally differentiating for at least one body measurement where the person does not fit), whereas "poor fit" may indicate that the person fits but (for at least one body measurement) desires a different fit, for example because the person desires a looser or tighter fit for the at least one body measurement for medical, anatomical and/or aesthetic reasons.

The return information may further indicate at least one property of said returned at least one item of clothing, most preferably information relating to the fitting of the person to at least one specific body measurement of the item of clothing. Thus, the return information may in particular comprise, or consist of, user feedback of the person for which body measurements have been determined and which has tried the returned at least one item of clothing.

For example, the person may have bought a shirt and then have returned it, indicating the degree or quality of fitting of the person at the shoulders, chest, sleeve length and/or the like. Such information is not only highly useful for providing an improved clothing size recommendation to the person in the future, it may also be used to train at least one of the artificial neural networks used in the method.

Preferably, the clothing size recommendation is generated also based on the return information.

In some advantageous embodiments, variants, or refinements of embodiments, the clothing size recommendation model comprises a learning sub-model, LSM, and a non-learning sub-model, NLSM. A weighted sum of an output of the LSM and of an output of the NLSM may calculated to provide a fitting score vector, and the clothing size recommendation is generated based at least on the provided fitting score vector. The weighting between the LSM and the NLSM may be based on a quality metric of the LSM such that with improving quality metric of the LSM, automatically the weight of the LSM increases. Said quality metric may include an accuracy of the LSM with a validation set, a number of training sets used for training the LSM, a number of training epochs and/or the like.

In some advantageous embodiments, variants, or refinements of embodiments, at least one weighting factor for the weighted sum for a clothing size recommendation regarding a particular item of clothing is variable and is based on a number of datasets (in particular training datasets) available for said particular item of clothing, wherein the datasets include at least one information about at least one body measurement of a user and at least one information ("fitting information") about how said particular item of clothing fits said user, specifically how at least one measurement of the item of clothing compared to at least one body measurement of the user (e.g. "waist too tight", "hips to loose", "inseam perfect fit").

In some advantageous embodiments, variants, or refinements of embodiments, the NLSM is based at least on a distance metric between:

a) at least one parameter of at least one item of clothing, and

b) at least one of the parameter value $\theta^k_i$ and/or at least one entry of the input tensor (for example, an averaging metric $\theta^{avg}_i$ of the parameter values $\theta^k_i$ for one parameter $\theta_i$ a).

This implements the basic idea that an item of clothing fits a person well if the body measurements of the person fit are as close as possible to the corresponding measurements of the item of clothing (i.e. waist measurement value of the person with respect to waist size of an item of clothing and so on). The distance metric may treat negative and positive distances differently, and may in particular penalize a too-small measurement of the item of clothing relatively more than a too-large measurement, since as a compromise often a loose fit for some body measurement which may cause a slight unseemliness is generally more acceptable than a tight fit that may cause discomfort.

In some advantageous embodiments, variants, or refinements of embodiments, the LSM comprises an artificial intelligence entity configured and trained to receive the input tensor as an input and to output a first fit likelihood vector of the same dimensions as a second fit likelihood vector output by the NLSM and/or outputs a first fit score. The fit likelihood vector may comprise, for each of a list of sizings and/or items of clothing, an entry indicating the likelihood that said sizing or item of clothing or combination of sizing and item of clothing is the best fit for the person. The first fit score may indicate a score (e.g. in the range of 0 to 100) of how well a particular (e.g. the best-fitting) sizing/item according to the fit likelihood vector actually fits the person. Alternatively, a first fit score vector may be comprised that indicates for each sizing/item how well it fits the person. Further alternatively, the fit likelihood vector may comprise the first fit score in one or more entries.

According to a third aspect, the present invention involves Straining the artificial intelligence entity.

In particular, an artificial neural network may be trained by return information provided by users, wherein the return information indicates fit ratings of the users in which they describe how well at least one measurement type of at least one item of clothing fits them.

Information about at least one body measurement of the users may be provided separately, e.g. retrievable via a unique identifier, or may be provided in a signal in which return information is transmitted. Thus, the return information encodes information about users' body measurements and how well they fit in relation to measurements of items of clothing. The return information may be automatically transmitted to a computing device configured for training the artificial neural network from web shops that request said information from users when they intend to return an item of clothing.

The invention further provides, according to a fourth aspect, a system configured to perform the method according to any embodiment of the first aspect of the present invention and/or configured to perform the method according to any embodiment of the second aspect of the present invention. The system may in particular comprise a mobile device (such as a smartphone, a tablet computer and/or the like) and a remote computing device (such as a cloud computing platform or a web server). The remote computing device may comprise a database and/or may be operatively coupled to a database of the system for storing data thereon, for example learning models to be trained, return information, user parameters, unique identifiers and/or the like.

Preferably the mobile device is configured (and used) to obtain the plurality of images of the person, for example by running (or, more preferably, in the case of a web application, displaying) an app that performs the necessary method steps. Further, the remote computing device preferably performs the method steps not performed by the mobile device, in particular the generating of the segmentation maps, the determining of the at least one body measurement, the generating of the clothing size recommendation and so on.

According to a further aspect, the invention thus also provides a server configured to receive the plurality of images obtained from the mobile device and/or the selected first input images, and to perform the remaining steps of any embodiment of the first aspect and/or of the second aspect of the present invention, in particular the generating of the segmentation maps, the determining of the at least one body measurement, the generating of the clothing size recommendation and so on.

The invention will be explained in yet greater detail with reference to exemplary embodiments depicted in the drawings as appended.

Brief Description of the Drawings

The accompanying drawings are included to provide a further understanding of the present invention and are incorporated in and constitute a part of the specification. The drawings illustrate the embodiments of the present invention and together with the description serve to illustrate the principles of the invention. Other embodiments of the present invention and many of the intended advantages of the present invention will be readily appreciated as they become better understood by reference to the following de-tailed description. Like reference numerals designate corresponding similar parts.

The numbering of method steps is intended to facilitate understanding and should not be construed, unless explicitly stated otherwise, or implicitly clear, to mean that the designated steps have to be performed according to the numbering of their reference signs.

| | |
|---|---|
| Fig. 1 | shows a flow diagram schematically illustrating an embodiment of the method according to the first aspect of the present invention; |
| Fig. 2 and Fig. 3 | schematically illustrate the method of Fig. 1 further; |
| Fig. 4 | shows a flow diagram schematically illustrating another embodiment of the method according to the first aspect of the present invention; |
| Fig. 5 | shows a flow diagram schematically illustrating a method according to an embodiment of the second aspect of the present invention; |
| Fig. 6 | shows an exemplary flow diagram according to further embodiments of the present invention; |
| Fig. 7 | shows a block diagram schematically illustrating a computer program product according to an embodiment of the sixth aspect of the present invention; |
| Fig. 8 | shows a block diagram schematically illustrating a data storage medium according to an embodiment of the seventh aspect of the present invention; and |
| Fig. 9 | shows a schematic block diagram illustrating a system according to an embodiment of the fifth aspect of the invention |

Detailed Description of Embodiments

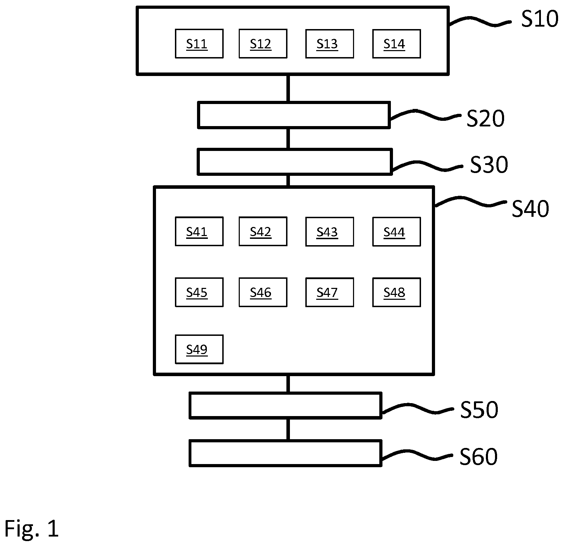

Fig. 1 shows a flow diagram schematically illustrating an embodiment of the method according to the first aspect of the present invention, i.e. a method for determining at least one body measurement of a person.

In a step S10 a plurality of images of the person is obtained, wherein the images in the plurality of images show the person from at least two different viewing angles, more preferably from at least four viewing angles, wherein the viewing angles are advantageously equally-spaced.

Most preferably, the plurality of images is obtained by recording a video of the person. In the following, an exemplary situation will be described in which a smartphone is used to take a video of the person for which the body measurements are to be determined using an app installed on the smartphone. However, it should be understood that numerous are variants, some of which have been described in the foregoing, exist for recording a video of the person.

In the present example, the recording of a video is performed using a standard smartphone RGB camera (front or back-facing).

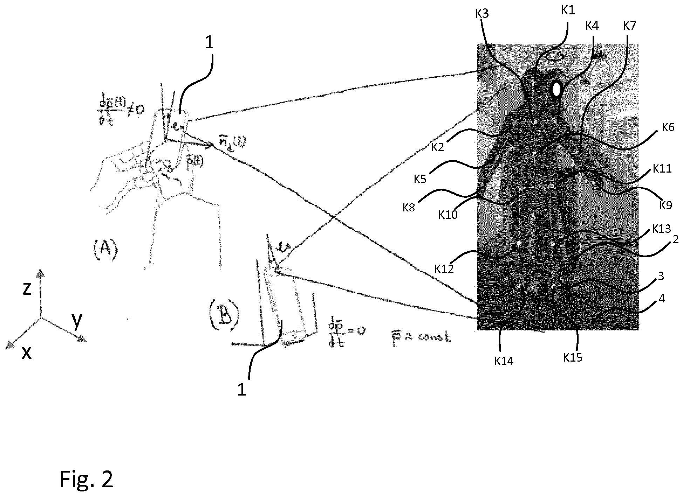

Fig. 2 schematically illustrates this process.

The smartphone 1 is handed to a person nearby to take the video (variant (A) in Fig. 2) or is placed against an object or a wall (variant (B) in Fig. 2). The recording is started in a step S11, and the person 2 (of which the body measurements are to be taken, and which may also be designated as the "subject" of the method) rotates, in a step S12, normally around their own longitudinal axis clockwise or counter-clockwise. The person 2 can either continuously rotate or introduce pauses in between. The rotation of the subject rotates is at least 360 degrees within 3 or more seconds.

During the video recording process, in a step S13, the orientation of the smartphone 1 as well as the linear accelerations in 3-dimensional space are recorded, preferably at frequencies of between 1 and 100Hz. A unit normal vector describing the axis parallel to the optical axis of the device's front or back-side camera is referred to herein as $\bar{n}_d$ and may be calculated in a step S14.

In a step S20, at least a sub-set of the received plurality of images is selected to provide first input images. In the present example, individual frames of the recorded video may be selected as the first input images. For example, every N-th frame of a video may be selected as a first input image, wherein N may be determined as N=fps/C, fps being the frames per second of the video and C being a constant that is preferably in the range of between 30 and 5. Alternatively, N may be fixed to a specific number of frames per second which may also be in the range of between 5 and 30.

In a step S30, segmentation maps 3 for the first input images are generated, wherein the segmentation maps 3 at least distinguish the person 2 and /or differentiate their body parts from a background 4. Any known segmentation method or segmentation algorithm, in particular using at least one artificial neural network, can be used for the generation of the segmentation maps.

In a step S40, location for a number of pre-defined key points on the human body as well as at least one silhouette of the person 2 in at least one of the plurality of obtained images (preferably in the first input images) are determined, specifically as follows:

In a step S41, at least a subset of the first input images are selected to provide third input images; all of the first input images may be selected as the third input images.

In a step S42, the locations for a number of pre-defined key points $K_i$ on the human body are determined by inputting the third input images into a first artificial neural network configured and trained to infer the location for the key points based on the input third input images.

The first artificial neural network DCNN1 can include multiple network branches in a combination of 2D convolution and deconvolution layers with any non-linearity as activation functions, Batch Normalization (BatchNorm) layers. The first artificial neural network DCNN1 may comprise between 25 and 500 hidden layers trained on training datasets to estimate the pose of the person from images (e.g. video frames).

The model infers a number key points (preferably in the range of from 4 to 100) on the human body in 3-dimensional space which describe the pixel (on the respective third input image) position and orientation (Euler angles, quaternions, dual quaternions etc.) of pre-defined joints such as wrist, elbow, shoulder, knees etc. or center points of organs or other landmarks on the human body such as the eyes, mouth, ears and others (marked as points in Fig. 2). The key point $K_i$ preferably comprise at least one pair of symmetric (with respect to the sagittal/longitudinal plane) key points, in the present example: key points $K_2$ and $K_4$ (shoulders), $K_5$ and $K_7$ (elbows), $K_8$ and $K_9$ (wrists), $K_{10}$ and $K_{11}$ (lateral hip bone end points), $K_{12}$ and $K_{13}$ (knees) and $K_{14}$ and $K_{15}$ (ankles). The pose of the person may be considered to consist of the collection of all key points $K_i$ and their articulations.

From a subset (or all) of the key points $K_i$ located on the human torso (in the present example e.g. $K_2$, $K_4$, $K_{10}$ and $K_{11}$), in a step S43 a unit normal vector $\bar{n}_p$ is calculated which represents the person's orientation in 3-dimensional space.

In a step S44, at least one distance L between pairs of symmetric key points on the left and right parts of the subject's torso (e.g. length from left shoulder key point K2 to right shoulder key point K4 projected to the current camera view) is measured and recorded for all or a subset of the frames. This may be performed already during the recording of the video by the app.

Preferably, between 1 and 10 distances L are measured between pairs of symmetric key points. If the pose is estimated for only a subset of the available frames (i.e. when there are fewer third input images than first input images), the measured distances L may be, in an optional step S45, interpolated and smoothed such as to have L for each of the first input images, or even for each frame of the video.

In a step S46, a frontal and back view $F_+$ (front) and $F_-$ (back) are selected by taking the images with the maximal Euclidean distance between the selected key point pairs. The two side views (left and right) designated as $S_L$ and $S_R$ are selected by taking the frames with minimal Euclidean distance either of one of the pairs (e.g. the largest one or the smallest one), or of the mean of the pairs. The app used for obtaining S10 the video may guide the person 2 to move in such a way that the specified view of the person are as clear as possible in the video.

If no clear the minima/maxima can be determined by using L, the unit normal vectors $\bar{n}_p$ and $\bar{n}_d$ are used to select the front and back views when they are as parallel/antiparallel as possible in the x-y plane (scalar product =1 or scalar product = -1, respectively). The side views are selected such that $\bar{n}_p$ and $\bar{n}_d$ are as parallel as possible in the x-y plane (scalar product = 0), wherein the x-y-plane refers to the plane on which the filmed person stands, the z direction is the direction in which the longitudinal axis of the person extends and x, y, z form an orthogonal coordinate system.

Apart from said four views, additional views may be determined for improved accuracy and robustness against occlusions and the like. For example, equidistantly between each two adjacent views an additional view may be determined so that in total eight views are provided. In the following, the situation of only four views will be described for simplicity.

Once the images (frames) with the four views (front, back, left, right) are obtained from the video, in an optional step S47 each image is normalized to have the same number of pixels and cropped to the subject's segmentation map to have equal distance from the outermost pixel in every side of the image.

In a step S48, in every fourth input image, the outline of the segmentation maps (herein designated as a "silhouette") is determined (or: calculated), preferably by using an edge detection algorithm such as Canny or similar (Canny generally consists of 5 steps: Noise reduction; Gradient calculation; Non-maximum suppression; Double threshold; Edge Tracking by Hysteresis). The silhouette of the segmentation maps includes the pixel coordinates of every pixel in the subject's silhouette.

In a step S49, for every pixel in the subjects silhouette the nearest key point $K_i$ is identified via 1-Nearest-Neighbor search with a Euclidean distance metric on the pixel coordinates along the width (horizontal, $c_w$) and height (vertical, $c_h$) of the 2-dimensional fourth input image.

The horizontal and vertical distances along with the index of the key point $K_i$ the silhouette pixel j was assigned to are stored as a silhouette triplet $st_j = (i_{kp}, d_w, d_h)$, wherein $i_{kp}$ indicates the corresponding key point $K_i$.

In a step S50, a first input tensor $\tilde{X}$ is formed by concatenating the key points $K_i$ from the pose estimation together with all silhouette triplets $st_j$ for each selected fourth input image are concatenated, for example as

$$\tilde{X} = (SSM_+, SSM_-, SSM_L, SSM_R, K_+, K_-, K_L, K_R),$$

wherein $SSM_+$ designates all silhouette triplets $st_j$ of the front view $F_+$, $SSM_-$ designates all silhouette triplets $st_j$ of the back view $F_-$, $SSM_L$ designates all silhouette triplets $st_j$ of the left side view $F_L$, $SSM_R$ designates all silhouette triplets $st_j$ of the right side view $F_R$, $K_+$ designates all key points $K_i$ of the front view $F_+$, $K_-$ designates all key points $K_i$ of the back view $F_-$, $K_L$ designates all key points $K_i$ of the left side view $F_L$, and $K_R$ designates all key points $K_i$ of the right side view $F_R$, and the "," in the above formula designates a concatenation.

In a step S60, the first input tensor $\tilde{X}$ is input into a body measurement determining model, preferably into a general linear model or an artificial neural network regressor model. The artificial neural network regressor model may comprise hidden layers in the range of 1 to 200 and may be configured and trained to receive the first input tensor $\tilde{X}$ and to determine, based thereon, at least one body measurement of the person, preferably all of the pre-defined body measurements (or: body measurement types). In other words, the body measurement determining model will map the first input tensor $\tilde{X}$ to a first body measurement vector $y_1$, wherein $y_1$ preferably has a size in the range of from 5 to 50, wherein each of the 5 to 50 entries indicates one body measurement value. In yet other words, the body measurement determining module represents a function $f_1$ with $f_1(\tilde{X}) = y_1$.

The body measurements of the first body measurement vector $y_1$ are herein also designated as first type body measurements. The method described in the foregoing is comparatively easy and quick to perform.

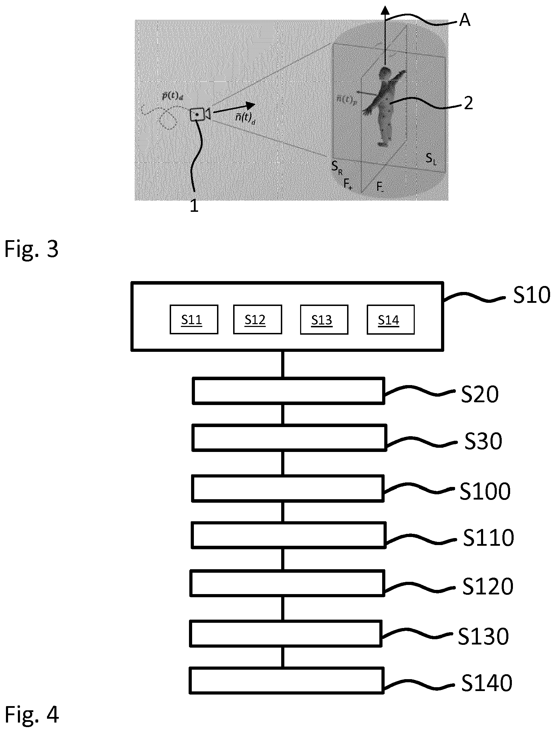

Fig. 3 schematically illustrates some of the core views of the person that are advantageously taken from the video of the person turning around their longitudinal axis A.

In the following, with respect to Fig. 4, additional and/or alternative method steps will be described which provide another type of body measurements which require longer to compute but are more accurate. One and the same application of the method (e.g. realized in an app or in a system) may be provided with options for generating both types of measurements, depending e.g. on a selection of a user, on a given time frame, on the requirements of the app and/or the like.

Thus, Fig. 4 describes a method according to another embodiment of the method according to the first aspect of the present invention.

Steps S10, S20 and S30 may be performed as has been described in the foregoing.

In a step S100, at least a sub-set of the first input images is selected to provide second input images. The selected first input images may be the same as the selected third input images, may overlap with the third input images, or may be completely separate from the third input images. Preferably, a number in the range of 10 to 300 frames are selected from the video as the second input images, and such frames are selected that have the rotating person facing equidistant angles in the ground plane (x-y plane in the coordinate system as defined in the foregoing) or, in other words, in a plane perpendicular to the ground plane, as measured or indicated by $\bar{n}_p$, which may be determined as has been described in the foregoing.

The goal is to take frames that differ in camera viewpoint V as much as possible regardless of the speed of rotation of the person, of video duration and frame rate. Here a viewpoint V constitutes the position and orientation of the camera view's optical axis.

In a step S110, in order to estimate a shape and/or pose of the person in each of the second input images, a corresponding parameter value $\theta^k_i$ for each image k of the second input images and for each parameter of a set of pre-defined parameters $\theta_i$ by fitting a parametric human body model (such as SMPL, BlendSCAPE or the like) to the person in each of the second input images based on the generated segmentation maps.

Specifically, the parametric human body model is fitted to 2-dimensional joint detections in an image for each frame under consideration of its neighboring k-frames in the sequence to estimate an initial shape and 3-dimensional pose. The 2-dimensional joint detections may be provided for example by any or all of the key points $K_i$ on the human body determined as has been described in the foregoing. Usable 2-dimensional joint detections are described for example in Bogo et al.: "Keep it SMPL: Automatic estimation of 3D human pose and shape from a single image.", Lecture Notes in Computer Science (Including Subseries Lecture Notes in Artificial Intelligence and Lecture Notes in Bioinformatics), 9909 LNCS, 561-578, https://doi.org/10.1007/978-3-319-46454-1 34.

In a simple variant, the influence of clothing on the person 2 while the images are obtained in step S10 is neglected. In some variants, however, the present clothing may be modelled by a noise term. The silhouettes of the segmentation maps 3 aligned in 3-dimensional space based on the determined key points $K_i$ may be used to form, or as a basis for interpolation of, a 3-dimensional silhouette of the person. In such an approach, the images may be treated, instead of being consecutive images of a rotating person 2, as images of a non-rotating person 2 taken from a camera virtually revolving around the person 2 so that the entirety of the segmentation map silhouettes form, or at least fit in, the 3-dimensional silhouette. The 3-dimensional silhouette may then be used to define boundary conditions for a process reconstructing the exact geometry of the "scanned" person 2 (i.e. of the "subject") apart from the naked body of the person 2.

Then, depending on the item of clothing or type of clothing for which a clothing size recommendation is sought, the noise term caused by the clothing worn by the person 2 may be neglected or included. For example, when the item of clothing or type of clothing is a jacket which is usually worn over a sweater, a noise term caused by the scanned person 2 wearing a sweater may be included. If, on the other hand, the same person 2 also requests a clothing size recommendation for an undershirt, the noise term may be neglected since undershirts are usually worn on the naked upper body.

Here a parametric body model is a model with any set of parameters $\theta = (\theta_1, \theta_2, ..., \theta_n)$ of R", 10 < n < 1000 that describe the geometrical shape, pose and other features of the human body. The number of frames k is preferably in the range from 3 to 60 and the parametric body pose of a subsequent frame is initialized with the one from the previous frame to ensure smoothness over time. In the present example, for every parameter entry $\theta_i$ the mean value $\theta^{avg}_i$ across the entire sequence of k-frames (i.e. of all $\theta^k_i$) is taken as a definitive parameter value. The resulting 3-dimensional body can be optionally unposed to a canonical A pose or T pose and the geometry can be intermediately stored in any standard format such as <.obj>, <.fbx> or similar.

In a step S120, a second input tensor $\hat{X}$ is generated. For example, the resulting geometry can be transformed to:

A) a 3rd order tensor with width W, height H and number of channels C,

or

B) a 2nd order tensor (matrix) with the width W, height H squashed into a single dimension A = W X H and again the same number of channels C.

Both versions A) and B) describe all or a sub-set of the geometrical data within the respective format and are referred to as second input tensor $\hat{X}$ herein. Both W, H or A represent an ordered list of all geometric vertices v and vertex normals vn or parameter space vertices vp, polygonal face elements f, line elements and others included in the format.

In a step S130, the second input tensor $\hat{X}$ is input into a second artificial neural network DCNN3 which is a deep convolutional neural network configured and trained to learn a mapping function $f_2(\hat{X}) = y_2$, wherein $y_2$ is a second body measurement vector.

In a step S140, the second body measurement vector $y_2$ is generated by the second artificial neural network based on the input tensor $\hat{X}$. $y_2$ preferably has a size in the range of from 5 to 100, wherein each of the 5 to 100 entries indicates one body measurement value. The body measurement vectors $y_1$ and $y_2$ may have the same size and their entries may indicate the same body measurement types, respectively.

The second artificial neural network preferably has between 3 and 200 hidden layers and is trained, e.g., on a dataset of between 100 and 1,000,000 unique instances of a human body's geometry. The training examples may consist of a combination from different datasets merged together as one data set with a common input format transformed into the format of the second input tensor $\hat{X}$ from the following sources:

- up to scale reconstructed 3-dimensional scans of real people made with special hardware like depth sensing time of flight cameras, KINECT or other IR and RGB sensors;
- up to scale reconstructed geometry of human bodies from Laser Scanners, stereo and multi view camera systems; and/or
- synthetically generated 3-dimensional human bodies or reconstructed from monocular video via parametric body models.

The 3-dimensional human bodies can have different poses and the target measurements y for each training sample and were extracted from the up to scale scans or manually taken.

As has been described in the foregoing, both the first and the second body measurement vector $y_1$, $y_2$ may be provided, or it may be decided either based on pre-defined rules and/or on the input of a user which body measurement vector is provided in a specific case. It should be understood that the embodiment or embodiments as described with respect to Fig. 1 to Fig. 4 may be adapted or modified according to any options, variants or refinements as are described herein.

The first and/or the second body measurement vector $y_1$, $y_2$ may be stored for the person in a databased, e.g. connected to a unique identifier of the person so that the person, as long as their body measurements do not significantly change, in the future may enter only their unique identifier to be provided with their first and/or second body measurement vector $y_1$, $y_2$.

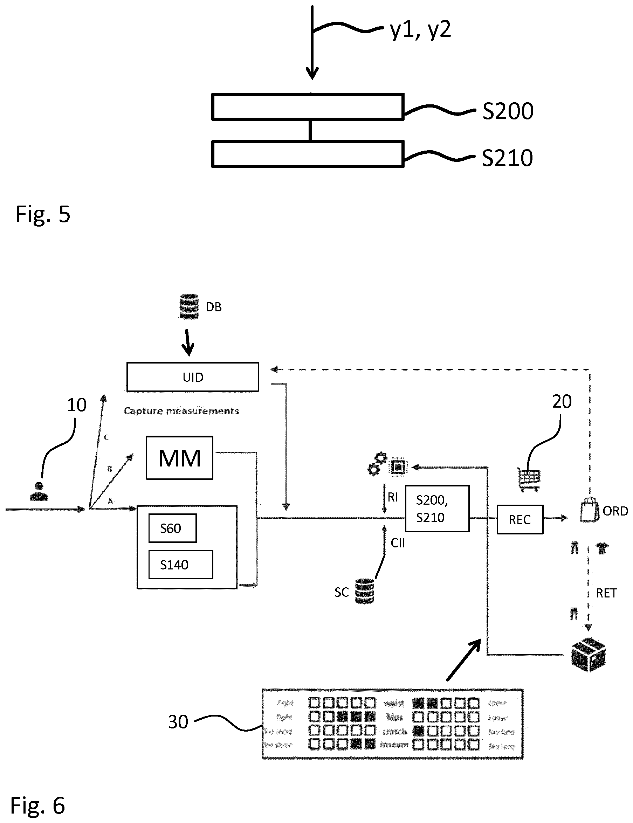

Fig. 5 shows a flow diagram schematically illustrating a method according to an embodiment of the second aspect of the present invention, i.e. a computer-implemented method for providing a clothing size recommendation for a person.

First, a body measurement is generated according to an embodiment of the method according to the first aspect of the present invention, in particular a first and/or second body measurement vector $y_1$, $y_2$ is generated according to the method as described with respect to Fig. 1 to Fig. 4 in the foregoing.

In a step S200, the at least one generated body measurement vector $y_1$, $y_2$ is input into a clothing size recommendation model configured to generate a clothing size recommendation based on the at least one body measurement vector $y_1$, $y_2$.

In a step S210, a clothing size recommendation is generated based on the at least one body measurement.

In the presently described example, the clothing size recommendation in plain words uses a weighted sum fr of two terms to indicate to the person to whom the body measurements belong at least one item of clothing and whether and/or how that item would fit the person.

For example, a user of the method (usually the person to whom the body measurements belong) may select a particular item of clothing, and the clothing size recommendation will indicate at least one of the sizings of said item of clothing which will fit the person the best and/or how well said sizing will fit the person. Alternatively or additionally, the user may also select a number of different items of clothing and will be provided with the same information, either with the best-fitting sizing of each item, or with the best-fitting sizing of all of the items and/or with corresponding information how well said sizing or sizings will fit the person.

In the presently used example, the goal is to predict fr = $(fr_{sz1}, fr_{sz2}, , fr_{szM})$, i.e. a fit rating vector fr for all available product or brand sizings 1, 2, ... M of a particular item of clothing, wherein the comma indicates a concatenation, and wherein each entry may comprise a fit likelihood and a fit score. The plurality of fit likelihood for all of the sizings may be designated as a fit likelihood vector. In some variants, the fit rating vector fr comprises the fit likelihood vector concatenated with the fit score for the sizing most likely to fit (according to the fit likelihood vector).

The fit rating vector fr is preferably calculated as a weighted sum by:

$$fr = w_{NL}\ fr_{NL} + wL\ fr_L$$

In other words, the fit rating vector fr is calculated by a weighted sum of two terms, $f_{NL}$ and $f_L$ (with corresponding weighting factors $w_{NL}$ and $w_L$), corresponding to a hybrid combination of a learning (L) and a non-learning (NL) approaches, realized by a learning sub-model LSM and a non-learning sub-model NLSM. The weighting factors $w_{NL}$ and $w_L$ may be normalized such that they always add up to one, but can also be defined in other ways.

In some variants, in order to calculate best fitting sizes of clothes, per-product or per-brand sizing data is stored in a database. The sizing data containing the relevant measurements can be derived from the sizing charts/tables provided by the clothing manufacturer. Alternatively, the relevant measurements can be directly exported from CAD software used to design clothes.

A sizing chart SC may be structured as follows in Table 1:

Table 1: Exemplary sizing chart SC

| $B$: <brand><br><br>PC: <product category><br>PF: <product fit> | Size 1, $sz_1$ (e.g. S) | Size 2, $sz_2$ (e.g. M) | Size 3, $sz_3$ (e.g. L) | Size 4, $sz_4$ (e.g. XL) |
|---|---|---|---|---|
| | | | | |
| Relevant measurement 1 $rm_1$ (e.g. height) | $m_{1,1,min}$ $m_{1,1,max}$ | $m_{1,2,min}$ $m_{1,2,max}$ | $m_{1,3,min}$ $m_{1,3,max}$ | $m_{1,4,min}$ $m_{1,4,max}$ |
| Relevant measurement 2 $rm_2$ (e.g. shoulders width) | $m_{2,1,min}$ $m_{2,1,max}$ | $m_{2,2,min}$ $m_{2,2,max}$ | $m_{2,3,min}$ $m_{2,3,max}$ | $m_{2,4,min}$ $m_{2,4,max}$ |
| Relevant measurement 3 $rm_3$ (waist circumference) | $m_{3,1,min}$ $m_{3,1,max}$ | $m_{3,2,min}$ $m_{3,2,max}$ | $m_{3,3,min}$ $m_{3,3,max}$ | $m_{3,4,min}$ $m_{3,4,max}$ |
| Relevant measurement 4 $rm_4$ (hips circumference) | $m_{4,1,min}$ $m_{4,1,max}$ | $m_{4,2,min}$ $m_{4,2,max}$ | $m_{4,3,min}$ $m_{4,3,max}$ | $m_{4,4,min}$ $m_{4,4,max}$ |
| Relevant measurement 5 $rm_5$ (sleeve length) | $m_{5,1,min}$ $m_{5,1,max}$ | $m_{5,2,min}$ $m_{5,2,max}$ | $m_{5,3,min}$ $m_{5,3,max}$ | $m_{5,4,min}$ $m_{5,4,max}$ |

The relevant measurements on the first column refer to the different body measurement types, and the remaining columns to minimum and maximum size values for these measurements for the respective sizings (S, M, L, XL).

The product fit modifier *PF* may be a number in a zero-mean range normalized to the range - 1 to + 1 defined by the available fits for a brand *B*. For example if a brand offers skinny fit, slim fit, regular, and comfort fit for the product category *PC*: pants, then $PF \in$ (*skinny fit*: -1 ; *slim fit*: -0.5 ; *regular*: + 0.5 ; *comfort fit*: + 1).

The product category PC can be for example 'tops' (shirts, t-shirts, sweaters, etc.), 'bottoms' (pants, jeans, tracksuit, shorts, etc.), 'outwear' (suit, blazer, coat, parka) and 'dresses' and one may differentiate between men, women and children versions for each, wherein the person may input additional information such as their gender, age and/or the like. The relevant measurements and the boundary values in the sizing chart SC can depend on the product category and the sizing data provided by the brand. The particular sizes depend on the brand's definition and can be converted between regional standards like EU, USA, DE, FR, UK, JP etc.

The learning (L) term is provided by the learning sub-model LSM, which may comprise a general linear model (multivariate regression model) or a third artificial neural network (regression network) with between 1 and 10 hidden layers of 3 to 100 hidden units each. The learning sub-model LSM is trained to predict the fit rating for each relevant body measurement type (depending on the product category, for example for pants: waist circumference, hips circumference, crotch length, in seam length, leg opening, etc..) with the user's relevant body measurements (according to the first and/or the second body measurement vector $y_1$, $y_2$), gender, input height, fit preference and product sizing chart according to the mapping function:

$$f(SC, EBM, UH, UG, UFP, UR) = f(features_{subject}, features_{target,}) = f(u_i, p_{j,s}) = fr_L$$

wherein SC is the target product/brand sizing chart; EBM is the extracted body measurements of the user according to the first and/or the second body measurement vector y1, y2; UFP is the person's (or: user's) fit preference; UH is the person's (or: user's) height; UG is the person's (or: user's) gender; and UR is a user rating. As illustrated by the middle terms of the above equation, the input of the learning sub-model LSM may be divided in a feature vector $u_i$ relating to a particular person (user or "subject") i, and a feature vector $p_{j,s}$ comprising clothing item information, in particular information related to a specific "target", i.e. target product/brand j and/or sizing s.

Herein, instead of directly using distance metric, a distance metric (e.g., Mean Squared Error (L2) or similar) is used to calculate the loss of the learning sub-model LSM during training via gradient descent-based optimization. In contrast to the non-learning approach described in the following, here an additional input UR ("user rating") is introduced. This can be seen as a content-based recommender system which predicts the fit rating given the similarity of person's features to the fit ratings for persons of similar body type, as well as the similarity of products they ordered and kept in the past and/or dissimilarity with products they ordered and sent back in the past (encapsulated e.g. in "return information"), as well as and the similarity of target product/brand, where the similarity measure is implicitly learned. In other words, the user rating may encapsulate information about products the same person has previously ordered and kept and/or about items of clothing the same person has previously returned.

The non-learning (NL) approach uses a distance function $\varphi$ using a distance metric between the measurements present in the sizing chart of the target product/brand (i.e. parameters of at least one item of clothing) and the same body measurements according to the provided first and/or the second body measurement vector $y_1$, $y_2$.

The fit likelihoods (i.e. a number indicating whether a particular sizing is the best-fitting sizing for the person 2) for each sizing of a certain item of clothing and brand may be calculated by building a sizing vector $sz_{sizing}$ for each available sizing as

$sz_{sizing} = (m_{1,avg}, m_{2,avg}, ..., m_{k,avg})$ with the mean reference values for each of K body measurement types the K measurement points and M available sizes of a product.

The distance function $\varphi$ may then receive parameters and input and may then output a second fit likelihood vector and/or a fit output score $fr_{NL}$, i.e.:

$$\Phi(SC, PF, EBM, UH, UG, UFP) = fr_{NL},$$

wherein SC is the target product/brand sizing chart; PF is the product fit modifier; EBM is the extracted body measurements of the user according to the first and/or the second body measurement vector y1, y2; UFP is the person's (or: user's) fit preference; UH is the person's (or: user's) height; UG is the person's (or: user's) gender. Any or all of these parameters may be removed or replaced with other suitable parameters, and the user requesting the clothing size recommendation may be asked (e.g. by an app, a web user interface, a web application and/or the like) to input any or all of these parameters.

The distance function $\varphi$ can use any distance metric such as Mean Square Error (MSE) or the like.

Preferably, depending on how much data is available, the weights between the learning (L) and a non-learning (NL) terms are changed such that more weight is put towards NL when labelled data is scarce and vice versa the weight of the L approach is increased as the dataset grows. This can for example be encoded by providing that:

$$w_{NL} = 1 - w_L$$

$$w_L = \max(D_I - \tau, 0),$$

wherein $D_I$ is the number of users that ordered a particular item and provided fitting information for it (preferably in relationship to at least one of their own body measurements, for example "waist was too narrow" together with information that the user has a specific waist body measurement), $\tau$ is a threshold constant between 10 and 1,000,000. The labelled dataset that is used for training the third artificial neural network is automatically growing as users who order using the recommendation and try the clothes on, submit fitting information as feedback (e.g. on the recommendations).

As soon as more than $\tau$ ratings have been submitted by shoppers for a product $w_L > 0$ and the learning submodel LSM starts to contribute towards the total fit rating vector fr.

The fit rating vector fr (indicating for each sizing how well it fits the person 2) can be converted into a fit likelihoods vector fl for all available sizes by applying a softmax function $\sigma$ over the fit rating vector fr:

$$fl = softmax(fr) = \sigma(w_{NL}\, fr_{NL} + w_L\, fr_L) = \frac{\exp(fr)}{\sum_{SZ_i}^{M} fr_{SZ_i}}$$

The item of clothing and sizing most likely to fit the person is then predicted e.g. via the formula $\arg\max_{SZ_i}(fl)$

In Fig. 6 an exemplary flow diagram according to further embodiments of the present invention is shown, in particular according to embodiments of the first aspect and/or of the second aspect. In the lower part of Fig. 6, relevant measurements for a particular product by a particular brand of the category 'bottoms' (specific: pants) are shown in an exemplary user interface 30 as: waist, hips, crotch, inseam, and the user may rate them e.g. according to eleven levels from "Tight" to "loose" or from "Too short" to "Too long". The relevant measurements depend on the sizing data. The ratings are positive 0 if the product is just the right size (no markings by the user in the graphical user interface), positive if the product is too big (or too loose) on that relevant measurement point and negative if the product is too small (or too tight).

According to Fig. 6, a process may be as follows: a user 10 decides to shop at an online web shop 20 for an item of clothing.

Three options are in principle available for the user 10 to provide their body measurements. As an option A, the user may use the method according to any embodiment of the first aspect of the present invention, in particular according to any embodiment or embodiments of Fig. 1 to Fig. 4, to generate first and/or the second body measurement vector $y_1$, $y_2$. For example, in order to provide option A, next to a specific item of clothing that the user 10 is interested in, the browser displays on the web site of the web shop 20 a button indicating "find my size" or something similar. The result of clicking this button (or otherwise activating the button, e.g. by touching it on a touch screen device) can depend on which device is used to display the browser. If the browser is already displayed by mobile device 1 comprising a suitable camera, for which a check may be made, then the app may immediately be started as a web application, for example in a new browser tab.

If the user 10 is browsing the web shop 20 on a device without a suitable camera, e.g. a desktop PC, the user 10 may be provided automatically with a QR code and/or a URL. The user 10 can then either scan the QR code with a mobile device with a camera, or enter the URL in a mobile device with a camera, as a result again a browser tab with the app will be opened.

Once the user 10 has been guided to the app, they follow the instructions provided automatically by the app to complete the scan and record a video of themselves (or another person 2) rotating. The video can either be recorded alone by placing the mobile device on the ground or a friend nearby can take a video of the user 10. When the measurement extraction is completed the user 10 sees a message to return back to the web shop 20 either on desktop PC or on the mobile device 1. From now on, as will be described in the following, next to every product they see on the web shop 20, they will be automatically shown e.g. the recommended sizes (or sizings) for the top two most likely-to-fit product sizes and the respective fit score (fit rating) for the single most likely-to-fit sizing. Using the app, the user 10 may be prompted to also enter user parameters such as user gender UG, user height UG, user fit preference UFP and so on. Any or all of these may be marked by the app as "required" or as "optional".

The recorded video, optionally together with acquired angles and orientation of the mobile device 1 over time, and further optionally user parameters (height, gender, fit preference) can be sent to a remote computing device (such as a web server or a virtual machine, VM, on the Cloud) which temporarily stores the video locally and stores the rest in a database attached to the browser session id.

The remote computing device may run the algorithm to select the images/frames according to the method described in the foregoing and reconstruct the human body and extract measurements. The resulting measurements are saved in the database an attached to the browser session id. The video and selected frames are preferably deleted afterwards to ensure privacy. For every new browser session id a (preferably human-readable) unique identifier UID) is generated. It is attached to the initial browser session id on the web shop 20 where the scan was initiated from, but can be reused on any other web shop 20 that employs the methods described herein to directly get recommendations without the person 2 having to be scanned anew.

As an alternative option B, the user 10 may choose to provide manual measurements MM.

As a third alternative option C, the user 10 may input (e.g. into the app) a unique identifier UID which has already been previously provided to them and which encapsulates or indicates the previously generated first and/or the second body measurement vector $y_1$, $y_2$ (or: EBM).

Options B and C may be offered to the user 10 within the app, or may be offered to the user 10 as alternatives to the app, for example as separate buttons shown by the browser displaying the website of the web shop.

In any case, the body measurements provided according to the chosen option A, B, or C are provided to a service provider, in particular to a web shop 20. In addition, user parameters as have been described in the foregoing may also be provided to the web shop 20 such as user fit preference UFP, user height UH and/or user gender UG. In case the user 10 already has a unique identifier UID, such user parameters may already be stored as linked to said unique identifier UID so that, choosing option C, the user 10 conveniently does not have to input them again.

Optionally, in addition return information RI may be provided to (and/or may be already stored at) the web shop 20, for example as has been described in the foregoing. Further optionally, clothing item information CII may be provided to the web shop 20, e.g. from a sizing chart SC.

The user 10 is then provided with a clothing size recommendation REC for at least one item of clothing, for example for a type of pants that the user is interested in. The clothing size recommendation REC may be made according to any embodiment of the method according to the second aspect of the present invention, in particular according to any variant as described with respect to Fig. 5 in the foregoing.

The user 10 then makes an order ORD of a particular sizing as recommended to the user 10. If the user 10 has used method A and has not previously had a unique identifier UID provided then, as a result of the order ORD (as illustrated schematically in Fig. 6), or even as a result of performing the steps of option A (i.e. of having the first and/or the second body measurement vector $y_1$, $y_2$ generated for them), the user 10 may be automatically provided with a unique identifier UID (upper dashed line in Fig. 6), which will be linked with the first and/or the second body measurement vector $y_1$, $y_2$.provided which will be stored in a database DB. Any new, or updated user parameters such as user fit preference UFP, user gender UG, user height UH may also be linked to the unique identifier UID and stored in the database DB.

Said user 10 may then, for their next shopping, choose option C of simply entering their unique identifier UID into a prompt (e.g. in a web interface, a web application, or in any other type), as a result of which the corresponding first and/or the second body measurement vector $y_1$, $y_2$.(or: EBM) will be retrieved from the database DB.

In case the user 10 then wants to return, RET, the ordered item of clothing, the user 10 will have to fill in a user interface 30 inquiring about fitting information of the various body measurements of the user 10 as related to the specific purchased item of clothing being returned. As has been described in the foregoing, a schematic user interface 30 is shown in Fig. 6.

As is also illustrated in Fig. 6, the information entered by the user 10 may then form part of the return information RI that is used to determine, in step S200 and steps S210, the next clothing size recommendation for the same user 10 who is preferably identified by their unique identifier UID.

Moreover, preferably the third artificial neural network used in the learning sub-model LSM is then trained, or updated, based on the information input by the user 10 into the user interface 30 (or based on the entirety of the return information RI).

In other words, the third artificial neural network may be pre-trained and may then be trained by the return information provided by all of the users 10. The method as outlined above ensures that for the first few (depending on the choice of $\tau$) uses of the user 10 of the described system, the non-learning sub-model NLSM will provide suitable results, and that with increasing return information (for the rare cases in which the NLSM was incorrect) the learning sub-model LSM will improve, and weigh in on the clothing size recommendation, more and more. The users 10 will thus help to train the learning sub-model which guarantees increasing satisfaction of the users 10 with the process described herein. Thus, the present invention also teaches a method for training a learning sub-module, LSM, more specifically an artificial neural network or a learning sub-module, LSM, using return information provided by a plurality of users.

The unique identifier UID is preferably a short code from between 3 and 6 digits and letters of lower or uppercase (e.g. 3G7, 412k, OL65A, or A1b2C3) that is attached to the browser session ID of the web shop 20 the user 10 was routed to from to the scanning app used for acquiring the video of the user 10. After the EBM are extracted from the video, preferably all visual information is deleted and only the information needed for the clothing size recommendations (e.g. EBMs, user height UH, user gender UG and user fit preference UFP) corresponding to the unique identifier UI is stored in the database DB. The unique identifier UI is anonymous in the sense that it only connects a browser session ID and a set of letters and digits to a limited set of values, which are not unique to a specific user/person. No names, emails or other information which makes it easy to identify a person can be inferred from the unique identifier UI.

For further improved data protection, optionally, upon submitting a video by the app to a server, or even already during the acquisition of the video, the face of the person in the video can be hidden e.g. via blurring so identification in the time span between uploading and generating measurements is not possible. The unique identifier UI can be re-used on the same web shop 20 after the browser sessions has expired, when shopping from another device or shared with friends and family to get product size recommendations for the person (user 10) it was generated for.

The unique identifier UI can also be used on other supported web shops 20 to get size recommendations for their fashion products. The unique identifier UI does not grant access to view the concrete measurements, but only to the measurements and/or the recommendations associated with the measurements that were extracted from the video and stored. The unique identifier UI can also be used offline in retail stores to always get the most likely to fit size of clothes and try them on. Here the user 10 opens, for example, a web application in the browser by scanning a code (e.g. a visual code such as a QR code or barcode, or another type of wireless code such as RFID) on the clothes tags/labels or directly navigates to the web application and scans the bar code of the product. If the user does not already have a unique identifier UI from before, the scanning process can also be done in a fitting room in the store.

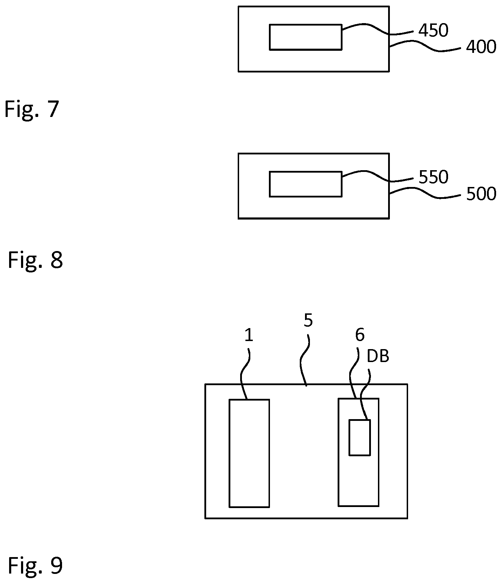

Fig. 7 shows a schematic block diagram illustrating a computer program product 400 comprising executable program code 450 configured to, when executed (e.g. by a computing device), perform the method according to an embodiment of the first aspect of the present invention and/or according to an embodiment of the second aspect of the present invention, in particular as has been described with respect to any of Figures 1 through 6.

Fig. 8 shows a schematic block diagram illustrating a non-transitory computer-readable data storage medium 500 comprising executable program code 550 configured to, when executed (e.g. by a computing device), perform the method according to an embodiment of the first aspect of the present invention and/or according to an embodiment of the second aspect of the present invention, in particular as has been described with respect to any of Figures 1 through 6.

Fig. 9 shows a schematic block diagram illustrating a system 5 according to an embodiment of the fifth aspect of the invention, i.e. a system 5 configured to perform the method according to any embodiment of the first aspect of the present invention and/or configured to perform the method according to any embodiment of the second aspect of the present invention, in particular in accordance with any of the methods and variants thereof described with respect to Fig. 1 to Fig. 6. The system 5may in particular comprise a mobile device 1 (such as a smartphone, a tablet computer and/or the like) and a remote computing device 6 (such as a cloud computing platform or a web server). The remote computing device 6 may comprise a database DB and/or may be operatively coupled to a database DB of the system 5 for storing data thereon, for example learning models to be trained, return information, user parameters, unique identifiers and/or the like.

In the foregoing detailed description, various features are grouped together in the examples with the purpose of streamlining the disclosure. It is to be understood that the above description is intended to be illustrative and not restrictive.

In a short summary, the present invention provides at least a method for determining at least one body measurement by obtaining a plurality of images, in particular a video, of a user. The video can be easily acquired by the user or a friend using a mobile device comprising a camera, such as a digital camera, a smartphone, a table computer and/or the like. Optionally, the invention also provides generating a clothing size recommendation based at least on the determined at least one body measurement. The clothing size recommendation may take additional parameters into account. Both for the determining of the body measurements and/or for the generating of the clothing size recommendation, artificial intelligence entities, in particular machine learning entities, more particular artificial neural networks may be used. Preferably, return information comprising ratings of users of whether and how well certain items of clothing fit them in the past is collected and used for the training of an artificial intelligence entity.

**Claims**

1. A computer-implemented method for determining at least one body measurement of a person, comprising at least the steps of:

   obtaining (S10) a plurality of images of the person (2), wherein the images in the plurality of images show the person (2) from at least two different angles;
   selecting (S20) at least a sub-set of the received plurality of images to provide first input images;
   generating (S30) segmentation maps (3) for the first input images, wherein the segmentation maps (3) at least distinguish the person (3) from a background (4);
   **characterized by** the steps of:

   selecting (S41) at least a subset of the first input images to provide third input images;
   determining (S42) locations for a number of pre-defined key points ($K_i$) on the human body by inputting the third input images into an artificial neural network configured and trained to infer the location for the key points ($K_i$) based on the input third input images;
   determining (S46), based on the determined locations for the key points ($K_i$), a subset of the first input images so as to provide fourth input images such that each of the fourth input images corresponds to one view of a set of pre-defined views of the person from different angles ($F_+$, $F_-$, $S_L$, $S_R$);
   generating (S48), for each of the fourth input images, a silhouette of the person (2) therein by determining an outline of the corresponding segmentation map (3); and
   determining (S60; S140) at least one body measurement for the person (2) by inputting the determined locations for the key points ($K_i$) and the generated silhouettes into a body measurement determining model.

2. The method of claim 1,
   wherein the plurality of images of the person (2) is a video of the person (2) or is extracted from a video of the person (2).

3. The method of claim 2,
   wherein the obtaining (S10) of the plurality of images comprises:
   acquiring the video of the person (2) by filming the person (2) while the person (2) is at least partially turning around their longitudinal axis (A).

4. The method of any of claims 1 to 3, further comprising:

   selecting (S100) at least a sub-set of the first input images to provide second input images;
   determining (S110), in order to estimate a shape and/or pose of the person (2) in each of the second input images, a corresponding parameter value $\theta^k_i$ for each image k of the second input images and for each parameter of a set of pre-defined parameters $\theta_i$ by fitting a parametric human body model to the person (2) in each of the second input images based on the generated segmentation maps (3);
   generating (S120) an input tensor based on the determined parameter values $\theta^k_i$
   inputting (S130) the input tensor into an artificial neural network configured and trained to infer at least one body measurement based on the input tensor;
   generating (S140), by the artificial neural network, at least one body measurement based on the input tensor.

5. A computer-implemented method for providing a clothing size recommendation, REC, for a person, comprising:

> determining (S60; S140) at least one body measurement according to the method of any of claims 1 to 4;
> inputting (S200) the at least one body measurement into a clothing size recommendation model configured to generate a clothing size recommendation, REC, based on the at least one body measurement; and
> generating (S210), by the size recommendation model, the clothing size recommendation, REC, based on the at least one body measurement.

6. The method of claim 5, comprising the step of

> receiving or retrieving clothing item information, CII, indicating at least one property of an item of clothing; and wherein the clothing size recommendation, REC, is generated also based on the clothing item information, CII.

7. The method of claim 6,

> wherein the clothing item information, CII, indicates properties of at least two different sizings of an item of clothing, and wherein the clothing size recommendation, REC, includes, for at least one of the at least two different sizings, a recommendation information of fitting or non-fitting of said at least one sizing for the person (2).

8. The method of any of claims 5 to 7, comprising the step of

> receiving or retrieving return information, RI, indicating at least one item of clothing which has been labelled as being of a wrong size or poor fit for a user;
> wherein the return information, RI, further indicates at least one property of said returned at least one item of clothing; and
> wherein the clothing size recommendation, REC, is generated also based on the return information, RI.

9. The method of any of claims 5 to 8,

> wherein the clothing size recommendation model comprises a learning sub-model, LSM, and a non-learning sub-model, NLSM;
> wherein a weighted sum of an output of the LSM and of an output of the NLSM is calculated to provide a fitting score vector; and
> wherein the clothing size recommendation, REC, is generated based at least on the provided fitting score vector.

10. The method of claim 9, wherein at least one weighting factor for the weighted sum for a clothing size recommendation, REC, regarding a particular item of clothing is variable and is based on a number of datasets available for said particular item of clothing, wherein the datasets include at least one information about at least one body measurement of a user (10) and at least one information about how said particular item of clothing fits said user (10).

11. The method of claim 9 or 10, wherein the NLSM is based at least on a distance metric between:

> a) at least one parameter of at least one item of clothing, and
> b) at least one of the parameter value $\theta^k_i$ and/or at least one entry of the input tensor.

12. The method of any of claims 9 to 11, wherein the LSM comprises an artificial intelligence entity configured and trained to receive the input tensor as an input and to output a first fit rating vector of the same dimensions as a second fit rating vector output by the NLSM and/or to output a fit score.

13. The method of claim 12 involving training the artificial intelligence entity.

**14.** A system (5) configured to perform the method of any of claims 1 to 12.


**Patentansprüche**

**1.** Ein computerimplementiertes Verfahren zum Bestimmen mindestens eines Körpermaßes einer Person, beinhaltend mindestens die folgenden Schritte:

Erhalten (S10) einer Vielzahl von Bildern der Person (2), wobei die Bilder in der Vielzahl von Bildern die Person (2) aus mindestens zwei verschiedenen Winkeln zeigen;
Auswählen (S20) mindestens eines Teilsatzes der empfangenen Vielzahl von Bildern, um erste Eingabebilder bereitzustellen;
Erzeugen (S30) von Segmentierungskarten (3) für die ersten Eingabebilder, wobei die Segmentierungskarten (3) mindestens die Person (3) von einem Hintergrund (4) unterscheiden;
**gekennzeichnet durch** die folgenden Schritte:

Auswählen (S41) mindestens eines Teilsatzes der ersten Eingabebilder, um dritte Eingabebilder bereitzustellen;
Bestimmen (S42) von Positionen für eine Anzahl vordefinierter Schlüsselpunkte ($K_i$) auf dem menschlichen Körper durch Eingeben der dritten Eingabebilder in ein künstliches neuronales Netzwerk, das konfiguriert und trainiert ist, um die Position für die Schlüsselpunkte ($K_i$) auf der Basis der eingegebenen dritten Eingabebilder abzuleiten;
Bestimmen (S46), auf der Basis der bestimmten Positionen für die Schlüsselpunkte ($K_i$), eines Teilsatzes der ersten Eingabebilder, um vierte Eingabebilder bereitzustellen, sodass jedes der vierten Eingabebilder einer Ansicht eines Satzes vordefinierter Ansichten der Person aus verschiedenen Winkeln ($F_+$, $F_-$, $S_L$, $S_R$) entspricht;
Erzeugen (S48), für jedes der vierten Eingabebilder, einer Silhouette der Person (2) darin durch das Bestimmen eines Umrisses der entsprechenden Segmentierungskarte (3); und
Bestimmen (S60; S140) mindestens eines Körpermaßes für die Person (2) durch das Eingeben der bestimmten Positionen für die Schlüsselpunkte ($K_i$) und der erzeugten Silhouetten in ein Körpermaßbestimmungsmodell.

**2.** Verfahren gemäß Anspruch 1,
wobei die Vielzahl von Bildern der Person (2) ein Video der Person (2) ist oder aus einem Video der Person (2) extrahiert ist.

**3.** Verfahren gemäß Anspruch 2,
wobei das Erhalten (S10) der Vielzahl von Bildern Folgendes beinhaltet:
Erlangen des Videos der Person (2) durch das Filmen der Person (2), während sich die Person (2) mindestens teilweise um ihre Längsachse (A) dreht.

**4.** Verfahren gemäß einem der Ansprüche 1 bis 3, ferner beinhaltend:

Auswählen (S100) mindestens eines Teilsatzes der ersten Eingabebilder, um zweite Eingabebilder bereitzustellen;
Bestimmen (S110), um eine Form und/oder eine Haltung der Person (2) in jedem der zweiten Eingabebilder zu schätzen, eines entsprechenden Parameterwerts $\theta^k_i$ für jedes Bild k der zweiten Eingabebilder und für jeden Parameter eines Satzes vordefinierter Parameter $\theta_i$ durch das Passen eines parametrischen Modells des menschlichen Körpers auf die Person (2) in jedem der zweiten Eingabebilder auf der Basis der erzeugten Segmentierungskarten (3);
Erzeugen (S120) eines Eingabetensors auf der Basis der bestimmten Parameterwerte $\theta^k_i$,
Eingeben (S130) des Eingabetensors in ein künstliches neuronales Netzwerk, das konfiguriert und trainiert ist, um mindestens ein Körpermaß auf der Basis des Eingabetensors abzuleiten;
Erzeugen (S140), durch das künstliche neuronale Netzwerk, mindestens eines Körpermaßes auf der Basis des Eingabetensors.

**5.** Ein computerimplementiertes Verfahren zum Bereitstellen einer Kleidungsgrößenempfehlung, EMP, für eine Person, beinhaltend:

Bestimmen (S60; S140) mindestens eines Körpermaßes nach dem Verfahren gemäß einem der Ansprüche 1 bis 4;

Eingeben (S200) des mindestens einen Körpermaßes in ein Kleidungsgrößenempfehlungsmodell, das konfiguriert ist, um eine Kleidungsgrößenempfehlung, EMP, auf der Basis des mindestens einen Körpermaßes zu erzeugen; und

Erzeugen (S210), durch das Größenempfehlungsmodell, der Kleidungsgrößenempfehlung, EMP, auf der Basis des mindestens einen Körpermaßes.

6. Verfahren gemäß Anspruch 5,

beinhaltend den Schritt des Empfangens oder Abrufens von Kleidungsstückinformationen, KSI, die mindestens eine Eigenschaft eines Kleidungsstücks angeben; und
wobei die Kleidungsgrößenempfehlung, EMP, auch auf der Basis der Kleidungsstückinformationen, KSI, erzeugt wird.

7. Verfahren gemäß Anspruch 6,
wobei die Kleidungsstückinformationen, KSI, Eigenschaften von mindestens zwei verschiedenen Größenbemessungen eines Kleidungsstücks angeben, und wobei die Kleidungsgrößenempfehlung, EMP, für mindestens eine der mindestens zwei verschiedenen Größenbemessungen, eine Empfehlungsinformation über das Passen oder Nichtpassen der mindestens einen Größenbemessung für die Person (2) umfasst.

8. Verfahren gemäß einem der Ansprüche 5 bis 7,

beinhaltend den Schritt des Empfangens oder Abrufens von Retourinformationen, RI, die mindestens ein Kleidungsstück angeben, das als für einen Benutzer eine falsche Größe oder schlechte Passung aufweisend bezeichnet worden ist;
wobei die Retourinformationen, RI, ferner mindestens eine Eigenschaft des retournierten mindestens einen Kleidungsstücks angeben; und
wobei die Kleidungsgrößenempfehlung, EMP, auch auf der Basis der Retourinformationen, RI, erzeugt wird.

9. Verfahren gemäß einem der Ansprüche 5 bis 8,

wobei das Kleidungsgrößenempfehlungsmodell ein lernendes Teilmodell, LTM, und ein nicht lernendes Teilmodell, NLTM, beinhaltet;
wobei eine gewichtete Summe eines Ausgangs des LTM und eines Ausgangs des NLTM berechnet wird, um einen Passungspunktzahlvektor bereitzustellen; und
wobei die Kleidungsgrößenempfehlung, EMP, mindestens auf der Basis des bereitgestellten Passungspunktzahlvektors erzeugt wird.

10. Verfahren gemäß Anspruch 9,
wobei mindestens ein Wichtungsfaktor für die gewichtete Summe für eine Kleidungsgrößenempfehlung, EMP, hinsichtlich eines speziellen Kleidungsstücks variabel ist und auf einer Anzahl von Datensätzen basiert, die für das spezielle Kleidungsstück verfügbar sind, wobei die Datensätze mindestens eine Information über mindestens ein Körpermaß eines Benutzers (10) und mindestens eine Information darüber, wie das spezielle Kleidungsstück dem Benutzer (10) passt, umfassen.

11. Verfahren gemäß Anspruch 9 oder 10,
wobei das NLTM auf mindestens einer Abstandsmetrik zwischen Folgendem basiert:

a) mindestens einem Parameter mindestens eines Kleidungsstücks und
b) mindestens einem von dem Parameterwert $\theta^k_i$ und/oder mindestens einem Eintrag des Eingabetensors.

12. Verfahren gemäß einem der Ansprüche 9 bis 11,
wobei das LTM eine Einheit künstlicher Intelligenz beinhaltet, die konfiguriert und trainiert ist, um den Eingabetensor als eine Eingabe zu empfangen und einen ersten Passungsbeurteilungsvektor mit denselben Dimensionen wie einem zweiten Passungsbeurteilungsvektor, der von dem NLTM ausgegeben wird, auszugeben und/oder eine Passungspunktzahl auszugeben.

**13.** Verfahren gemäß Anspruch 12, das das Trainieren der Einheit künstlicher Intelligenz involviert.

**14.** Ein System (5), das konfiguriert ist, um das Verfahren gemäß einem der Ansprüche 1 bis 12 durchzuführen.

## Revendications

**1.** Un procédé mis en œuvre par ordinateur pour la détermination d'au moins une mensuration d'une personne, comprenant au moins les étapes suivantes :

obtention (S10) d'une pluralité d'images de la personne (2), les images de la pluralité d'images montrant la personne (2) sous au moins deux angles différents ;
sélection (S20) d'au moins un sous-ensemble de la pluralité d'images reçues pour fournir des premières images d'entrée ;
génération (S30) de cartes de segmentation (3) pour les premières images d'entrée, les cartes de segmentation (3) différenciant au moins la personne (3) d'un arrière-plan (4) ;
**caractérisé par** les étapes suivantes :

sélection (S41) d'au moins un sous-ensemble des premières images d'entrée pour fournir des troisièmes images d'entrée ;
détermination (S42) d'emplacements pour un nombre de points essentiels prédéfinis ($K_i$) sur le corps humain par introduction en entrée des troisièmes images d'entrée dans un réseau de neurones artificiels configuré et entraîné pour inférer l'emplacement pour les points essentiels ($K_i$) sur la base des troisièmes images d'entrée introduites en entrée ;
détermination (S46), sur la base des emplacements déterminés pour les points essentiels ($K_i$), d'un sous-ensemble des premières images d'entrée de manière à fournir des quatrièmes images d'entrée de sorte que chacune des quatrièmes images d'entrée corresponde à une vue d'un ensemble de vues prédéfinies de la personne sous des angles différents ($F_+$, $F_-$, $S_L$, $S_R$) ;
génération (S48), pour chacune des quatrièmes images d'entrée, d'une silhouette de la personne (2) sur celle-ci par détermination d'un contour de la carte de segmentation correspondante (3) ; et
détermination (S60 ; S140) d'au moins une mensuration pour la personne (2) par introduction en entrée des emplacements déterminés pour les points essentiels ($K_i$) et des silhouettes générées dans un modèle de détermination de mensurations.

**2.** Le procédé de la revendication 1,
dans lequel la pluralité d'images de la personne (2) est une vidéo de la personne (2) ou est extraite d'une vidéo de la personne (2).

**3.** Le procédé de la revendication 2,
dans lequel l'obtention (S10) de la pluralité d'images comprend :
l'acquisition de la vidéo de la personne (2) par filmage de la personne (2) tandis que la personne (2) tourne au moins en partie sur son axe longitudinal (A).

**4.** Le procédé de n'importe lesquelles des revendications 1 à 3, comprenant en outre :

la sélection (S100) d'au moins un sous-ensemble des premières images d'entrée pour fournir des deuxièmes images d'entrée ;
la détermination (S110), afin d'estimer une forme et/ou une pose de la personne (2) sur chacune des deuxièmes images d'entrée, d'une valeur de paramètre $\theta^k_i$ correspondante, pour chaque image k des deuxièmes images d'entrée et pour chaque paramètre d'un ensemble de paramètres $\theta_i$ prédéfinis par adaptation d'un modèle de corps humain paramétrique à la personne (2) sur chacune des deuxièmes images d'entrée sur la base des cartes de segmentation générées (3) ;
la génération (S120) d'un tenseur d'entrée sur la base des valeurs de paramètres $\theta^k_i$ déterminées
l'introduction en entrée (S130) du tenseur d'entrée dans un réseau de neurones artificiels configuré et entraîné pour inférer au moins une mensuration sur la base du tenseur d'entrée ;
la génération (S140), par le réseau de neurones artificiels, d'au moins une mensuration sur la base du tenseur d'entrée.

5. Un procédé mis en œuvre par ordinateur pour la fourniture d'une recommandation de taille de vêtement, REC, pour une personne, comprenant :

la détermination (S60 ; S140) d'au moins une mensuration suivant le procédé de n'importe lesquelles des revendications 1 à 4 ;
l'introduction en entrée (S200) de l'au moins une mensuration dans un modèle de recommandation de taille de vêtement configuré pour générer une recommandation de taille de vêtement, REC, sur la base de l'au moins une mensuration ; et
la génération (S210), par le modèle de recommandation de taille, de la recommandation de taille de vêtement, REC, sur la base de l'au moins une mensuration.

6. Le procédé de la revendication 5,

comprenant l'étape de réception ou d'extraction d'informations sur l'article vestimentaire, CII, indiquant au moins une propriété d'un article vestimentaire ; et
dans lequel la recommandation de taille de vêtement, REC, est générée aussi sur la base des informations sur l'article vestimentaire, CII.

7. Le procédé de la revendication 6,
dans lequel les informations sur l'article vestimentaire, CII, indiquent des propriétés d'au moins deux catégories de taille différentes d'un article vestimentaire, et dans lequel la recommandation de taille de vêtement, REC, inclut, pour au moins l'une de ces au moins deux catégories de taille différentes, des informations de recommandation d'adaptation ou de non adaptation de ladite au moins une catégorie de taille pour la personne (2).

8. Le procédé de n'importe lesquelles des revendications 5 à 7,

comprenant l'étape de réception ou d'extraction d'informations de retour, RI, indiquant au moins un article vestimentaire qui a été étiqueté comme n'étant pas une bonne taille pour un utilisateur ou comme étant mal adapté à celui-ci ;
dans lequel les informations de retour, RI, indiquent en outre au moins une propriété dudit au moins un article vestimentaire retourné ; et
dans lequel la recommandation de taille de vêtement, REC, est générée aussi sur la base des informations de retour, RI.

9. Le procédé de n'importe lesquelles des revendications 5 à 8,

dans lequel le modèle de recommandation de taille de vêtement comprend un sous-modèle à apprentissage, LSM, et un sous-modèle sans apprentissage, NLSM ; dans lequel une somme pondérée d'une sortie du LSM et d'une sortie du NLSM est calculée pour fournir un vecteur de score d'adaptation ; et
dans lequel la recommandation de taille de vêtement, REC, est générée sur la base au moins du vecteur de score d'adaptation fourni.

10. Le procédé de la revendication 9,
dans lequel au moins un facteur de pondération pour la somme pondérée pour une recommandation de taille de vêtement, REC, concernant un article vestimentaire particulier est variable et est basé sur un nombre d'ensembles de données disponibles pour ledit article vestimentaire particulier, les ensembles de données incluant au moins une information portant sur au moins une mensuration d'un utilisateur (10) et au moins une information portant sur comment ledit article vestimentaire particulier sera adapté audit utilisateur (10).

11. Le procédé de la revendication 9 ou de la revendication 10,
dans lequel le NLSM est basé au moins sur une distance métrique entre :

a) au moins un paramètre d'au moins un article vestimentaire, et
b) au moins un élément parmi la valeur de paramètres $\theta^k_i$, et/ou au moins une composante du tenseur d'entrée.

12. Le procédé de n'importe lesquelles des revendications 9 à 11,
dans lequel le LSM comprend une entité d'intelligence artificielle configurée et entraînée pour recevoir le tenseur d'entrée comme entrée et pour délivrer en sortie un premier vecteur d'évaluation d'adaptation des mêmes dimensions qu'un deuxième vecteur d'évaluation d'adaptation délivré en sortie par le NLSM et/ou pour délivrer en sortie un score d'adaptation.

13. Le procédé de la revendication 12 impliquant l'entraînement de l'entité d'intelligence artificielle.

14. Un système (5) configuré pour réaliser le procédé de n'importe lesquelles des revendications 1 à 12.

Fig. 1

Fig. 2

Fig. 3

Fig. 4

Fig. 5

Fig. 6

450

400

Fig. 7

550

500

Fig. 8

5

1

6

DB

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2010111370 A1
- US 2015154453 A1
- US 5515168 A
- CN 108986159 A

### Non-patent literature cited in the description

- **LOPER et al.** SMPL: A Skinned Multi-Person Linear Model. *ACM Trans. Graphics (Proc. SIGGRAPH Asia),* October 2015, vol. 34 (6), 248
- **D.A. HIRSHBERG et al.** Coregistration: simultaneous alignment and modeling of articulated 3d shape. *Proceedings of the twelfth European conference on computer vision,* 2012, 242-255
- **BOGO et al.** Keep it SMPL: Automatic estimation of 3D human pose and shape from a single image. *Lecture Notes in Computer Science (Including Subseries Lecture Notes in Artificial Intelligence and Lecture Notes in Bioinformatics), 9909 LNCS,* 561-578, https://doi.org/10.1007/978-3-319-46454-1 34